# EUROPÄISCHE PATENTANMELDUNG

(11) **EP 0 647 999 A1**
(43) Veröffentlichungstag der Anmeldung: **12.04.1995**
(21) Anmeldenummer: 94115627.5
(22) Anmeldetag: 04.10.1994
(51) Int. Cl.: H02G 3/04, H02G 3/12

(54) **Installationskanal**

(30) Priorität: 06.10.1993 DE 9315160 U
(71) Anmelder: Traupe, Hans-Martin, D-22869 Schenefeld (DE)
(72) Erfinder: Traupe, Hans-Martin, D-22869 Schenefeld (DE)
(74) Vertreter: Liebelt, Rolf, Dipl.-Ing.

(57) **Zusammenfassung**

In einem Installationskanal für Versorgungsleitungen 23 der an der Wand eines Gebäudes befestigbar ist, und eine Rückwand 1, Oberwand 2, Bodenwand 3 sowie Vorderwand 4 aufweist, ist mindestens ein Gerätehalter 9 für Installationsgeräte 10 wie Steckdosen, Schalter oder dgl. vorgesehen. Die Vorderwand 4 ist einstückig mit der Oberwand 2 ausgebildet und deckt nur den oberen Bereich des Installationskanales ab. Der Gerätehalter 9 ist an der Innenseite der Vorderwand 4 und an der Rückwand 1 in bezug zur Oberwand 2 geneigt angeordnet.

## Beschreibung

Die Erfindung betrifft einen Installationskanal für Versorgungsleitungen, der an der Wand oder Konsole eines Gebäudes befestigbar ist und ein Kanalunterteil von im wesentlichen rechtechkigen Querschnitt mit einer Rückwand, einer Oberwand, einer Bodenwand sowie einer das Kanalunterteil verschließenden Vorderwand umfaßt, wobei an der Rückwand sich in Kanallängsrichtung erstreckende Befestigungsmittel vorgesehen sind, an denen mindestens ein als Gerätehalter für Installationsgeräte oder Anschlußelemente wie Steckdosen, Schalter oder dgl. ausgebildetes Einbauteil durch Einhängen oder Einrasten befestigbar ist.

Bei derartigen Installationskanälen wird die Vorderwand mit den Rändern an der Ober- und Bodenwand festgerastet und werden an der Rückwand Gerätehalter in Form von Isolierdosen oder -bechern befestigt, in die Installationsgeräte eingesetzt werden. Im Bereich der Isolierdose wird in die Vorderwand eine Öffnung eingearbeitet, die mit einem dem Installationsgerät entsprechenden Blendrahmen verkleidet wird. Die Anordnung des Isolierbechers an der Rückwand geschieht nach erfolgter Montage des Kanalunterteiles z. B. auf einer Zimmerwand an der Stelle, die der späteren Bestimmung des Installationsgerätes optimal genügt. In die Kanalvorderwand kann die Zugangsöffnung zum Installationsgerät erst nach dessen Anordnung im Kanal angebracht werden, was mit zeitaufwendigen Meß- und Paßvorgängen verbunden ist. Bei diesen Kanälen sind die aus der Vorderwand ragenden Teile der Installationsgeräte wie Stecker mit Anschlußleitungen frei zugängig und daher vor Beschädigungen nicht geschützt.

Es sind auch Installationskanäle bekannt, bei denen die Auslaßöffnungen für die Installationsgeräte in die Kanalbodenwand eingearbeitet sind. Durch diese Maßnahme wird zwar die Beschädigungsgefahr für die Installationsgeräte verringert. Die Montage dieser Geräte bleibt aber aufwendig.

Aufgabe der Erfindung ist es nun, die Anordnung von Installationsgeräten in einem Installationskanal nicht nur zu erleichtern und zu verbessern, sondern diese Geräte auch vor Beschädigungen durch unmittelbare äußere Einwirkungen zu schützen.

Erfindungsgemäß wird diese Aufgabe ausgehend von einem Installationskanal der eingangs beschriebenen Gattung dadurch gelöst, daß die Vorderwand einstückig mit der Oberwand ausgebildet ist und nur den oberen Bereich des Kanalunterteiles abdeckt und der Gerätehalter zur Oberwand geneigt angeordnet sowie an der Innenseite der Vorderwand und an der Rückwand gehalten ist.

Zur Anordnung eines Installationsgerätes oder Anschlußelementes in einem Installationskanal nach der Erfindung ist es nur erforderlich, einen Gerätehalter an ausgewählter Stelle an der Vorderwand und Rückwand des Installationskanales zu befestigen und dieses Gerät am Gerätehalter anzubringen. Dabei wird durch die erfindungsgemäß geneigte Anordnung der Gerätehalter im Inneren des Installationskanales erreicht, daß die Leitungen der mit den Anschlußelementen verbundenen Stecker nach unten aus dem Installationskanal herausragen und somit ebenso wie die Stecker im Kanal vor Beschädigungen weitgehend geschützt sind.

Bei einer bevorzugten Ausgestaltung der Erfindung hat es sich zur Befestigung des Gerätehalters bewährt, an der Vorderwand eine U-förmige Rinne vorzusehen, deren einer Schenkel einen zum anderen Schenkel weisenden Ansatz hat, hinter den der Kopf des Gerätehalters eingehängt wird, dessen Fuß sich auf einem Steg an der Rückwand formschlüssig abstützt. Dabei kann der Fuß mit einem Anschlag an einer Seite des Steges anliegen und mit einer Rastnase auf der dem Anschlag gegenüberliegenden Seite hinter den Steg greifen. Der Fuß kann zusätzlich gegen seitliches Verschieben in Richtung Kanalachse z. B. mit einer Schraube gesichert sein.

Zur Vergrößerung des Volumens des Installationskanales kann an einem hakenförmigen Steg an der Bodenwand ein Schenkel einer L-förmigen Kanalwand eingehängt sein, an deren anderem freien Schenkel an der Bodenwand befestigbare Gerätehalter gehalten sind. Dabei hat es sich bewährt, daß der Öffnungsschlitz des hakenförmigen Steges zur Befestigungswand für den Installationskanal weist, wodurch die L-förmige Kanalwand auch bei einem an der Gebäudewand angebrachten Installationskanal nachträglich durch Schwenken eingehängt werden kann.

Zur Verbesserung des Schutzes der im Installationskanal angeordneten Geräte und Kabel kann die Öffnung des Kanales bei einer anderen Ausgestaltung der Erfindung durch eine Vielzahl aneinanderstoßender Deckelelemente abgedeckt sein, die sich auf Haltebügeln abstützen und mit dem oberen Rand in einen Schlitz an der Vorderwand eingesetzt sind. Dabei kann der Schlitz vom freien Rand der Vorderwand sowie dem Boden der U-förmigen Rinne begrenzt und der Haltebügel kraftschlüssig an der U-förmigen Rinne sowie formschlüssig an der Bodenwand gehalten sein.

Bei einer anderen Weiterbildung der Erfindung können zur Verhinderung des ungehinderten Zugriffes in den Installationskanal die Deckelelemente Schlösser, deren Riegel unter die Haltebügel greifen, und Abdeckflächen aufweisen, die sich über den Haltebügel hinaus bis zum freien Rand der Bodenwand erstrecken können und in die mit Verschlußstücken verschließbare Aussparungen als Kabelauslaßöffnungen eingearbeitet sein können.

Weitere zweckmäßige Ausgestaltungen und Einzelheiten der Erfindung sind in Unteransprüchen und in einem Ausführungsbeispiel an Hand der Zeichnungen beschrieben. Es stellen dar:

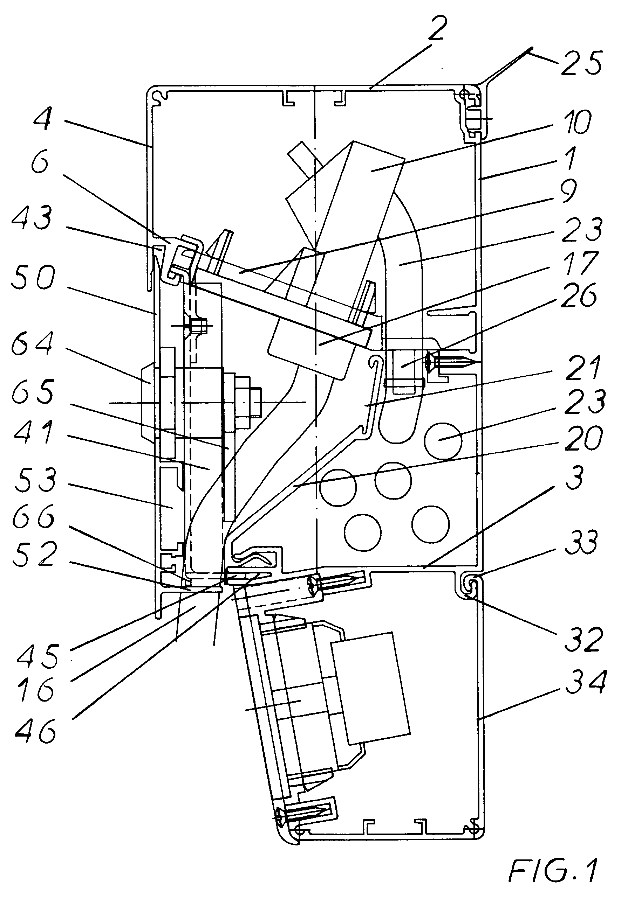

- Fig. 1:: eine schematische Schnittansicht durch einen Installationskanal nach der Erfindung,

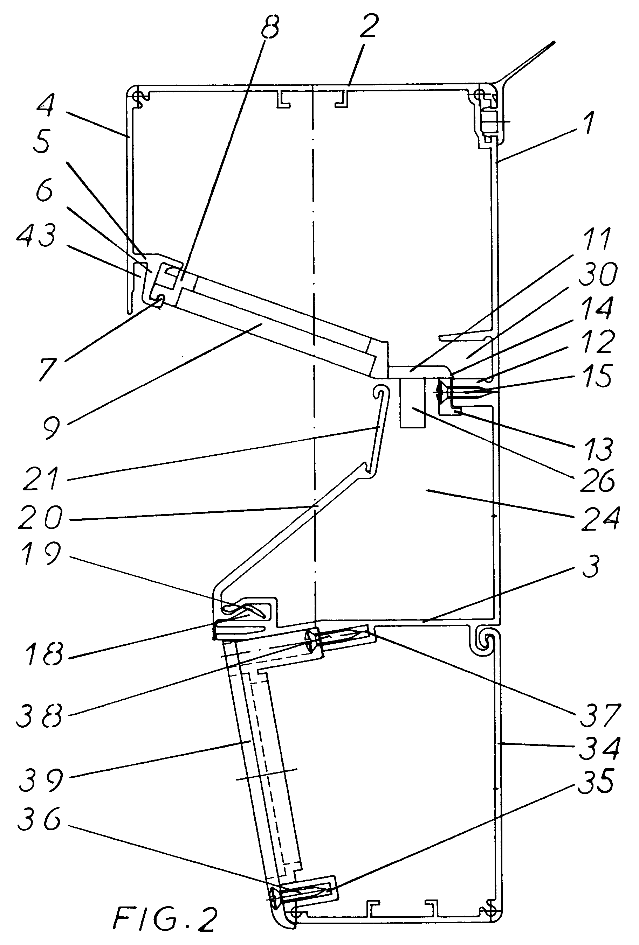

- Fig. 2:: die Anordnung eines Gerätehalters in einer schematischen Schnittansicht gemäß Fig. 1,

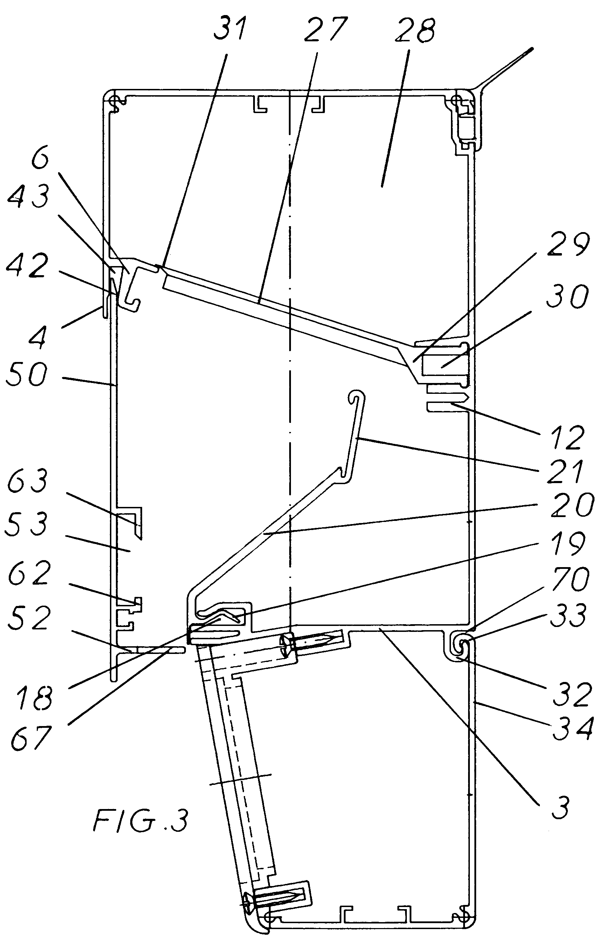

- Fig. 3:: die Anordnung eines Kabelhalters in einer schematischen Schnittansicht gemäß Fig. 1,
- Fig. 4:: eine schematische Ansicht eines teilweise geöffneten Installationskanales gemäß Fig. 1 im anderen Maßstab,
- Fig. 5:: eine schematische Ansicht auf die Öffnung des Installationskanales gemäß Fig. 1 ohne verschließbares Deckelelement und Installationsgeräte,
- Fig. 6:: eine schematische Ansicht gemäß der Linie A-A der Fig. 6,
- Fig. 7:: eine schematische Ansicht gemäß der Linie B-B der Fig. 6
- Fig. 8:: eine schematische Ansicht auf zwei aneinanderstoßende Deckelelemente des Installationskanales in Fig. 1,
- Fig. 9:: eine schematische Ansicht gemäß der Linie C-C der Fig. 8,
- Fig. 10:: eine schematische Schnittansicht des unteren Bereiches eines Deckelelementes.

Der dargestellte Installationskanal ist an einer nicht gezeigten Gebäudewand mit seiner Rückwand 1 befestigbar, an die eine Oberwand 2 und Bodenwand 3 angeformt sind. Die Oberwand 2 geht in eine Vorderwand 4 über, die etwa die halbe Breite der Rückwand 1 hat, wodurch ein freier Zugang zu dem Installationskanal erhalten wird. An der Kante zwischen Oberwand 2 und Rückwand 1 ist noch eine elastische Lippe 25 gehalten, die einen sanften Übergang zwischen Kanal und Gebäudewand schafft.

An das freie Ende der Vorderwand 4 ist auf einem in das Innere des Installationskanales ragenden Steg 5 eine im wesentlichen U-förmige Rinne 6 angeordnet, deren einer Schenkel einen auf den anderen Schenkel gerichteten Ansatz 7 trägt. In diese Nut 6 ist hinter den Ansatz 7 der entsprechend geformte Kopf 8 eines rahmenförmigen Gerätehalters 9 für Anschlußelemente 10 wie Steckdosen, Schalter oder dergleichen eingehängt.

Der Fuß 11 des sich geneigt über den Installationskanal erstreckenden Gerätehalters 9 stützt sich auf einem Steg 12 an der Rückwand 1 des Installationskanales ab, liegt mit einem Anschlag 13 seitlich am Steg 12 an und greift mit einer Rastnase 14 auf der dem Anschlag 13 gegenüberliegenden Seite hinter den Steg 12. Der Fuß 11 ist weiter mit einer Bohrung versehen, in welcher eine im Steg 12 gehaltene Schraube 15 angeordnet ist, um den Gerätehalter in Kanallängsrichtung festzulegen. Durch die geneigte Anordnung des Gerätehalters 9 im Installationskanal ragen die Leitungen 16 der mit den Anschlußelementen 10 verbundenen Stecker 17 nach unten aus dem Installationskanal heraus und sind somit ebenso wie die Stecker 17 im wesentlichen vor Beschädigungen geschützt.

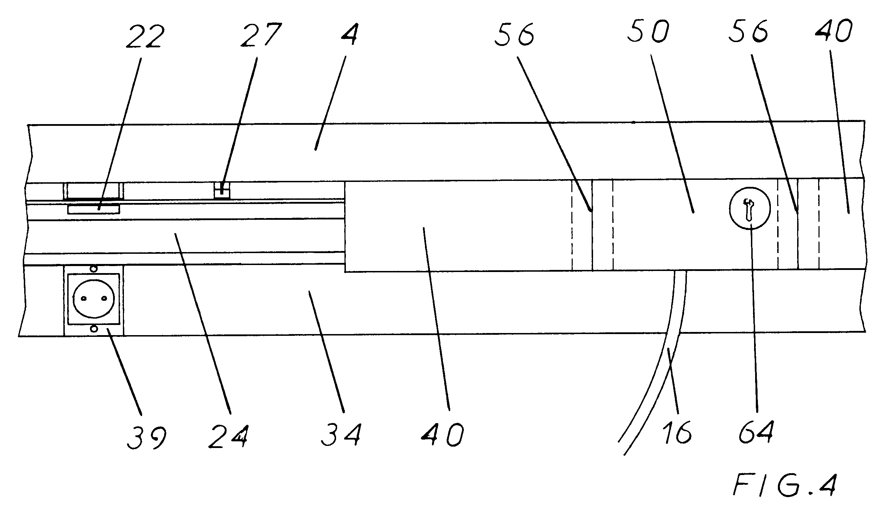

Am freien Rand der Bodenwand 3 ist in einen Halteschlitz 18 die Zunge 19 einer Kabelhaltewand 20 eingesetzt, welche das Herausfallen der im unteren Raum 24 des Installationskanales verlegten Kabel 23 unterbindet. Das in den Installationskanal ragende freie Ende der Kabelhaltewand 20 weist eine C-förmige Nut 21 auf, in die auswechselbare Schilder 22 (Fig. 4) mit Informationen zu den Anschlußelementen 10 in Gerätehalter 9 einsetzbar sind.

Das mit einem Anschlußelement 10 zu verbindende Kabel 23 wird aus dem Raum 24 durch eine nicht gezeigte Öffnung im Gerätehalter 9 geführt und dort von einer Haltezunge mit Kabelbinder 26 zugentlastet.

Anstatt des Gerätehalters 9 kann zwischen der U-förmigen Rinne 6 an der Vorderwand 4 und dem Steg 12 an der Rückwand 1 ein Kabelhalter 27 im Installationskanal vorgesehen sein. Der Kabelhalter 27, der im Oberraum 28 des Installationskanales verlegte Kabel (nicht dargestellt) getrennt von den Kabeln 23 im unteren Raum 24 des Installationskanales hält, ist mit seinem Unterteil 29 in eine Nut 30 an der Rückwand 1 eingerastet und stützt sich mit seinem Oberteil 31 außen an der U-förmigen Rinne 6 ab.

An der Außenseite der Bodenwand 3 ist angrenzend an die Rückwand 1 des Installationskanales ein hakenförmiger Steg 32 angeformt, dessen Öffnungsschlitz 70 zur Befestigungsfläche (nicht dargestellt) für den Installationskanal weist und in den eine Umbiegung 33 am freien Ende eines Schenkels einer L-förmigen Kanalwand 34 eingehängt ist. Am freien Ende des anderen Schenkels der Kanalwand 34 ist ein Schlitz 35 zur Aufnahme von Schrauben 36 vorgesehen. Ein weiterer Schlitz 37 zur Aufnahme von Schrauben 38 ist an der Bodenwand 3 ausgebildet. Mit den Schrauben 36 und 38 sind Gerätehalter 39 befestigbar, die dem aus der L-förmigen Kanalwand 34 und der Bodenwand 3 gebildeten sowie an der Bodenwand 3 angehängten Installationskanal die erforderliche Stabilität verleihen.

Um die im Installationskanal angeordneten Kabel und Installationsgeräte vor unbefugtem Zugriff zu schützen, kann die Öffnung zwischen der Vorderwand 4 und Bodenwand 3 mit einem Deckel verschlossen werden. Der Deckel besteht aus einer Vielzahl aneinanderstoßender Deckelelemente 40 und 50, die sich auf Haltebügeln 41 abstützen und mit dem oberen Rand 42 in einen Schlitz 43 eingesetzt sind, der zwischen dem Boden der U-förmigen Rinne 6 und der Vorderwand 4 gebildet ist.

Jeder Haltebügel 41 besteht im wesentlichen aus einer Platte, die eine am Ansatz 7 der U-förmigen Rinne 6 der Vorderwand 4 anliegende Umbiegung 44 und eine Stützfläche 45 aufweist, die in eine zum Halteschlitz 18 parallele Stütznut 46 am freien Rand der Bodenwand 3 eingreift. Am die Umbiegung 44 aufweisenden Bereich ist noch ein Klemmstück 47 mit einer Schraube 48 am Haltebügel 41 gehalten. Das Klemmstück 47 ragt mit einem Haken 49 über die Umbiegung 44 des Haltebügels hinaus. Der Haken 49 greift hinter den Schenkel der U-förmigen Rinne 6, der dem Schenkel mit dem Ansatz 7 gegenüberliegt und bildet zusammen mit der Umbiegung 44 beim Anziehen der Schraube 48 an der U-förmigen Rinne 6 eine kraftschlüssige Verbindung zur Befestigung des Haltebügels 41.

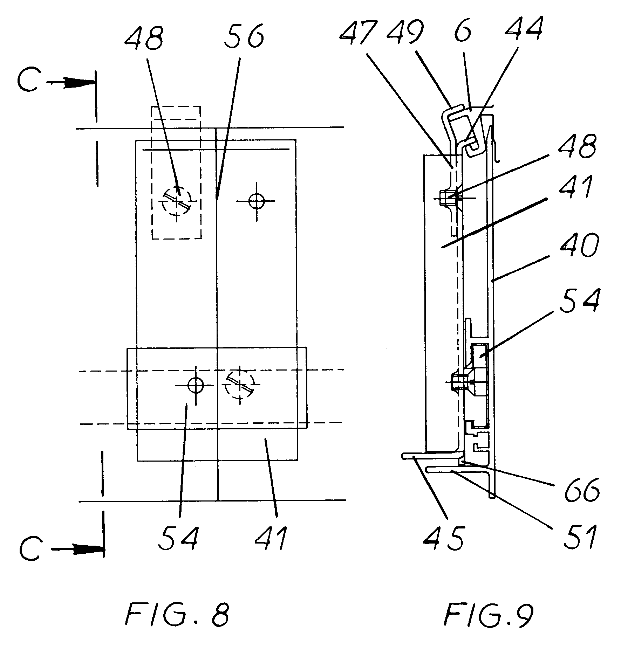

Die Deckelelemente 40 und 50 weisen am unteren Rand eine Abdeckfläche 51 bzw. 52 auf, die sich über den Haltebügel 41 hinaus bis zum freien Rand der Bodenwand 3 des Installationskanales erstreckt. Auf der zum Haltebügel 41 weisenden Fläche der Deckelelemente 40 bzw. 50 ist weiter eine C-förmige Haltenut 53 angeformt, in die am Haltebügel 41 befestigte Deckelträger 54 bzw. 55 eingreifen. Die Deckelträger sind in den Bereichen des Installationskanales ohne Anschlußelemente 10 im wesentlichen quaderförmige Elemente, über welche die Deckelelemente 40 von der Seite her parallel zur Rückwand 1 des Installationskanales geschoben und so angeordnet werden, daß die Stoßfugen 56 von zwei benachbarten Deckelelementen 40 etwa in der Mitte der Deckelträger 54 liegen (Fig. 8 und 9).

Der mit Deckelelementen 40, die auf Deckelträgern 54 geführt sind, verschlossene Installationskanal kann folglich nur durch seitliches Verschieben der Deckelelemente 40 geöffnet werden. Dies ist nicht nur unerwünscht, sondern auch unmöglich, wenn die Öffnung des Installationskanales vollständig mit Deckelelementen 40 abgedeckt ist. Um den Zugriff zu den Anschlußelementen 10 im Installationskanal zu ermöglichen, weisen die Deckelträger 55, auf denen ein die Anschlußelemente 10 schützendes Deckelelement 50 angeordnet ist, neben einem quaderförmigen Stück 57 einen halbrunden Ansatz 58 auf. Auf dem quaderförmigen Stück 55 liegen die Deckelelemente 40 auf, hinter denen keine Anschlußelemente 10 vorgesehen sind, während das die Anschlußelemente 10 schützende Deckelelement 50 auf den halbrunden Ansätzen 58 gehalten ist.

Bei vom Installationskanal entfernten, die Anschlußelemente 10 schützenden Deckelelement 50 können die angrenzenden Deckelelemente 40 auf den Deckelträgern 54 und 55 seitlich verschoben werden, wodurch der Installationskanal in unerwünschten Bereichen geöffnet werden kann. Um dies zu verhindern, wird in die C-förmige Haltenut 53 ein mit einer Schraube 59 feststellbarer Stopper 60, der mit dem quaderförmigen Stück 57 des Deckelträgers 55 zusammenwirkt, eingesetzt, bevor der Deckelträger 55 auf dem Haltebügel 41 angeordnet wird.

Nach dem Befestigen des Deckelträgers 55 werden die in dessen halbrunden Ansatz 58 vorgesehenen beispielsweise als Schlitzschrauben ausgebildeten Befestigungsmittel 61 gegen Lösen z. B. durch Zerstören von deren Schlitz gesichert. Der Zugang zu den an die Anschlußelemente 10 angrenzenden Räumen des Installationskanales ist folglich nur nach Zerstören der Deckelelemente 40 oder anderer Kanalteile möglich.

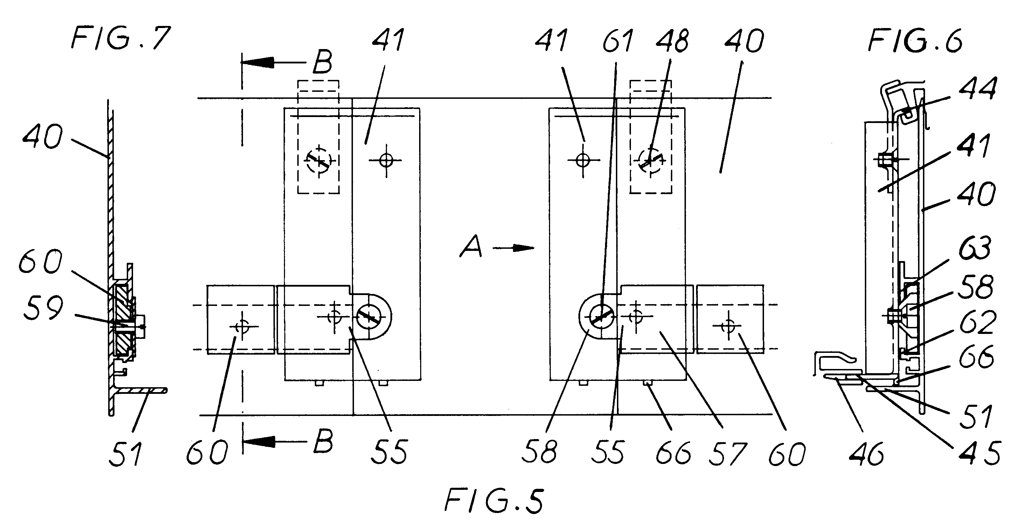

Der halbrunde Ansatz 58 des Deckelträgers 55 ist als Kegelstumpf ausgebildet, dessen Spitze auf dem Haltebügel 41 aufliegt. Der Fuß des Kegelstumpfes, der in die C-förmige Haltenut 53 am Deckelelement 50 ragt, ist geringfügig schmaler als die Breite der Öffnung der C-förmigen Haltenut 53, deren diese Öffnung begrenzende Schenkel 62 und 63 unterschiedlich lang sind. Nach Einschieben des oberen Randes 42 des Deckelelementes 50 in den Schlitz 43 an der Vorderwand 4 sowie Einführen des Fußes des Kegelstumpfes am halbrunden Ansatz 58 des Deckelträgers 55 in die C-förmige Haltenut 53 am Deckelelement 50 wird dasselbe abgesenkt, so daß dessen Abdeckfläche 52 dem freien Rand der Bodenwand 3 des Installationskanales gegenüber liegt. In dieser Lage greift der obere lange Schenkel 63 der Haltenut 53 am Deckelelement 50 hinter den Fuß des Kegelstumpfes am halbrunden Ansatz 58 des Deckelträgers 55 und hält das Deckelelement 50 in der Schließstellung (Fig. 6), ohne das Deckelelement vor unbefugtem Öffnen zu schützen. Hierzu sind als Sicherungseinrichtungen am Deckelelement 50 ein Schloß 64, dessen Riegel 65 unter den Haltebügel 41 greift und am Haltebügel 41 Zapfen 66 vorgesehen, die an die Abdeckfläche 52 anstoßen.

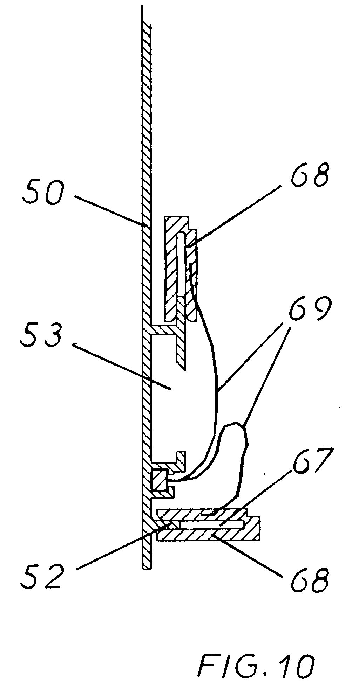

Zum Herausführen der Leitungen 16 an den Steckern 17 der Anschlußelemente 10 aus dem Installationskanal sind in die Abdeckfläche 52 am Deckelelement 50 Aussparungen 67 eingearbeitet, in die bei Nichtgebrauch Verschlußstücke 68 einfügbar sind, die die Aussparung 67 vollständig ausfüllen und mit einem Faden 69 oder ähnlichen Element unverlierbar am Deckelelement 50 gehalten sind (Fig. 10).

Die Erfindung ist nicht auf die dargestellte und beschriebene Ausgestaltung begrenzt, sondern schließt für den Fachmann geläufige Abwandlungen ein. So können z. B. die Gerätehalter in eine Rinne an der Rückwand eingehängt sein und sich an der Vorderwand abstützen.

## Patentansprüche

1. Installationskanal für Versorgungsleitungen, der an der Wand oder Konsole eines Gebäudes befestigbar ist und ein Kanalunterteil von im wesentlichen rechteckigem Querschnitt mit einer Rückwand, einer Oberwand, einer Bodenwand sowie mit einer das Kanalunterteil verschließenden Vorderwand umfaßt, wobei an der Rückwand sich in Kanallängsrichtung erstreckende Befestigungsmittel vorgesehen sind, an denen mindestens ein als Gerätehalter für Installationsgeräte oder Anschlußelemente ausgebildetes Einbauteil durch Einhängen oder Einrasten befestigbar ist, dadurch gekennzeichnet, daß die Vorderwand (4) einstückig mit der Oberwand (2) ausgebildet ist und nur den oberen Bereich des Installationskanales abdeckt und der Gerätehalter (9) zur Oberwand (2) geneigt angeordnet sowie an der Innenseite der Vorderwand (4) und an der Rückwand (1) gehalten ist.

2. Installationskanal nach Anspruch 1, dadurch gekennzeichnet, daß an dessen Vorderwand (4) eine U-förmige Rinne (6) vorgesehen ist, deren einer Schenkel einen zum anderen Schenkel weisenden Ansatz (7) hat, hinter den der Kopf (8) des Gerätehalters (9) einhängbar ist, dessen Fuß (11) sich auf einem Steg (12) an der Rückwand (1) formschlüssig abstützt.

3. Installationskanal nach einem der vorhergehenden Ansprüche, dadurch gekennzeichnet, daß das mit dem Anschlußelement (10) zu verbindende Kabel (23) von einer am Gerätehalter (9) vorgesehenen Haltezunge mit Kabelbinder (26) zugentlastet wird.

4. Installationskanal nach einem der vorhergehenden Ansprüche, dadurch gekennzeichnet, daß an einem hakenförmigen Steg (32) an der Bodenwand (3) ein Schenkel einer L-förmigen Kanalwand (34) eingehängt ist, an deren anderen freien Schenkel an der Bodenwand (3) befestigbare Gerätehalter (39) gehalten sind.

5. Installationskanal nach einem der vorhergehenden Ansprüche, gekennzeichnet durch eine Vielzahl von aneinanderstoßenden Deckelelementen (40, 50), die sich auf Haltebügeln (41) abstützen und mit dem oberen Rand (42) in einen Schlitz (43) an der Vorderwand (4) einsetzbar sind.

6. Installationskanal nach Anspruch 5, dadurch gekennzeichnet, daß der Schlitz (43) vom freien Rand der Vorderwand (4) und dem Boden der U-förmigen Rinne (6) begrenzt ist.

7. Installationskanal nach Anspruch 5 oder 6, dadurch gekennzeichnet, daß der Haltebügel (41) kraftschlüssig an der U-förmigen Rinne (6) sowie formschlüssig an der Bodenwand (3) gehalten ist.

8. Installationskanal nach einem der Ansprüche 5 bis 7, dadurch gekennzeichnet, daß die Deckelelemente (40, 50) am unteren Rand eine Abdeckfläche (51, 52) aufweisen, die sich über den Haltebügel (41) hinaus bis zum freien Rand der Bodenwand (3) erstreckt.

9. Installationskanal nach Anspruch 8, dadurch gekennzeichnet, daß die Abdeckflächen (52) der Deckelelemente (50) Aussparungen (67) als Kabelauslaß eingearbeitet sind.

10. Installationskanal nach Anspruch 9, dadurch gekennzeichnet, daß die Aussparungen (67) mit Verschlußstücken (68) verschließbar sind.

11. Installationskanal nach einem der Ansprüche 5 bis 10, dadurch gekennzeichnet, daß an den Haltebügeln (41) befestigbare Deckelträger (54, 55) in eine C-förmige Haltenut (53) an den Deckelelementen (40, 50) eingreifen.

12. Installationskanal nach Anspruch 11, gekennzeichnet durch Deckelträger (55) mit einem quaderförmigen Stück (57) und einem halbrunden Ansatz (58).

13. Installationskanal nach Anspruch 11 oder 12, dadurch gekennzeichnet, daß die Deckelträger (54, 55) mit einem Stopper (60) in der C-förmigen Haltenut (53) der Deckelelemente (40, 50) zusammenwirken.

14. Installationskanal nach einem der Ansprüche 12 oder 13, dadurch gekennzeichnet, daß der halbrunde Ansatz (58) am Deckelträger (55) als Kegelstumpf mit an den Haltebügel (41) angrenzender Spitze ausgebildet ist.

15. Installationskanal nach einem der Ansprüche 5 bis 14, dadurch gekennzeichnet, daß am Deckelelement (50) ein Schloß (64) vorgesehen ist, dessen Riegel (65) unter den Haltebügel (41) greift.

16. Installationskanal nach Anspruch 15, gekennzeichnet durch Arretierungen am Haltebügel (41), die mit dem Riegel (65) zusammenwirken und das Deckelelement (50) unverrückbar festhält.
